# EUROPEAN PATENT APPLICATION

(11) **EP 2 559 884 A2**
(43) Date of publication of application: **20.02.2013**
(21) Application number: 12179584.3
(22) Date of filing: 07.08.2012
(51) Int. Cl.: F02C 9/28

(54) **System and method for operating a combustor**

(30) Priority: 19.08.2011 US 201113213433
(71) Applicant: General Electric Company, Schenectady, NY 12345 (US)
(72) Inventor: Thatcher, Robert Thomas, Greenville, SC South Carolina 29615 (US); Kraemer, Gilbert Otto, Greenville, SC South Carolina 29615 (US); Rodwell, Andrew, Mitchell, Greenville, SC South Carolina 29615 (US); Scheid, Matthew M., Atlanta, GA Georgia 30339 (US)
(74) Representative: Cleary, Fidelma

(57) **Abstract**

A system (40) for operating a combustor (14) includes a sensor (42) that measures an operating parameter associated with the combustor (14) and generates a signal (56) reflective of the operating parameter. The operating parameter is reflective of an ash deposition rate or an accumulated ash buildup. A controller (44) receives the signal (56), compares the signal (56) to a predetermined limit, and generates a control signal (62). A method for operating a combustor (14) includes operating the combustor (14) at a first power level that produces a first temperature that is less than or equal to a first predetermined temperature (68) and creating a layer of ash. The method further includes measuring an operating parameter reflective of an ash deposition rate or an accumulated ash buildup, comparing the operating parameter to a limit, and operating the combustor (14) at a second power level that produces a second temperature that is greater than or equal to the first predetermined temperature.

## Description

### FIELD OF THE INVENTION

The present invention generally involves a system and method for operating a combustor. More specifically, the present invention describes a system and method that controls, limits, or adjusts operating levels of the combustor to facilitate the use of ash bearing fuels.

### BACKGROUND OF THE INVENTION

Combustors are commonly used to ignite fuel to produce combustion gases having a high temperature and pressure. For example, a typical gas turbine used to generate electrical power includes an axial compressor at the front, one or more combustors around the middle, and a turbine at the rear. Ambient air may be supplied to the compressor, and rotating blades and stationary vanes in the compressor progressively impart kinetic energy to the working fluid (air) to produce a compressed working fluid at a highly energized state. The compressed working fluid exits the compressor and flows through one or more nozzles into a combustion chamber in each combustor where the compressed working fluid mixes with fuel and ignites to generate combustion gases having a high temperature and pressure. The combustion gases flow along a hot gas path through the turbine where they expand to produce work. For example, expansion of the combustion gases in the turbine may rotate a shaft connected to a generator to produce electricity.

The fuel supplied to the combustors may vary according to several factors. For example, fuel costs and available supplies may make it desirable to supply the combustor with certain low-value petroleum fractions, such as very heavy crude oils, heavy distillates, distillation residues from atmospheric or vacuum distillation, byproducts resulting from deep conversion of oils, high cycle oils, and slurries derived from fluid catalytic cracking units. These low-value fuels often contain contaminants and other impurities, such as oil soluble vanadium, which, when combusted, produces very corrosive byproducts having a low melting point. For example, the byproduct vanadium pentoxide V₂O₅, particularly in association with alkali metals such as sodium or potassium, is corrosive to metal alloys, ceramics, and thermal barrier coatings that may line a hot gas path from the combustor through the turbine.

Vanadium inhibitors such as calcium, iron, aluminum, and magnesium oxides or salts or nickel compounds may be added to the fuel or injected into the combustors. These vanadium inhibitors react with the vanadium compounds to produce orthovanadate compounds generally in the general form M₃(VO₄)₂, in which M denotes the vanadium inhibitor. For example, in the particular case of using magnesium as an inhibitor, a magnesium orthovanadate Mg₃(VO₄)₂ is formed according to the following reaction:

V₂O₅ + 3MgO → Mg₃(VO₄)₂

In the presence of sulphur oxides, the magnesium orthovanadate partially decomposes to produce water-soluble magnesium sulphate MgSO₄ and magnesium pyrovanadate Mg₂V₂O₇ according the following reaction:

Mg₃(VO₄)₂ + SO₃ → Mg₂V₂O₇ + MgSO₄

At surface temperatures above approximately 1650°F, corresponding to a combustor firing temperature of approximately 2000°F, the water-soluble magnesium sulfate decomposes into a higher density and insoluble magnesium oxide MgO according to the following reaction:

MgSO₄ → MgO + SO₃

The reaction between the vanadium inhibitors and the vanadium compounds is thus effective at isolating the vanadium to protect metal alloys, ceramics, and thermal barrier coatings from corrosion. However, the orthovanadate compounds M₃(VO₄)₂ and the magnesium sulfate MgSO₄ and magnesium oxide MgO byproducts also precipitate as ash along the hot gas path. The ash deposits along the hot gas path progressively interfere with the aerodynamic and thermal properties of the surfaces along the hot gas path, reducing the efficiency and/or power output of the gas turbine. The ash deposits may be periodically removed to restore the efficiency and/or power output of the gas turbine using various cleaning procedures. For example, a "dry cleaning" procedure may be performed while the gas turbine is operating at a reduced load by injecting projectiles, such as nut shell fragments of a calibrated size, through the combustor. The combustor sinters the projectiles to produce a slightly abrasive, ash-free material that impinges on the hot gas path surfaces to erode the ash deposits. Alternately, or in addition, a "water washing" procedure may be performed while the gas turbine is off-line by injecting water through the turbine to dissolve and carry away the ash deposits. However, the water washing procedure generally requires that the gas turbine be shutdown and cooled for several hours beforehand to reduce thermal stresses in the turbine. In addition, both the dry cleaning and water washing procedures have limited effectiveness at removing the more dense and insoluble magnesium oxide ash, especially compared to the effectiveness at removing the magnesium sulfate ash.

As a result, combustors operating on low-value fuels containing oil soluble vanadium are generally limited to firing temperatures of less than 2000°F to reduce or prevent the formation of the more dense and insoluble magnesium oxide ash. This reduced firing temperature produces a corresponding reduction in the maximum power level and efficiency of the gas turbine. Therefore, an improved system and method for operating a combustor that allows the combustor to operate using low value fuels containing oil soluble vanadium without unduly sacrificing efficiency, power output, and/or availability would be useful.

### BRIEF DESCRIPTION OF THE INVENTION

Aspects and advantages of the invention are set forth below in the following description, or may be obvious from the description, or may be learned through practice of the invention.

One aspect of the present invention is a system for operating a combustor. The system includes a sensor that measures an operating parameter associated with the combustor and generates a signal reflective of the operating parameter. The operating parameter is reflective of at least one of an ash deposition rate or an accumulated ash buildup in a hot gas path. A controller in communication with the sensor receives the signal reflective of the operating parameter, compares the signal reflective of the operating parameter to a predetermined limit, and generates a control signal for operating the combustor.

The system further includes a compressor, a combustor downstream from the compressor, a fuel supply in fluid communication with the combustor, and a turbine downstream from the combustor.

The present invention also resides in a method for operating a combustor that includes operating the combustor at a first power level that produces a first temperature in a hot gas path that is less than or equal to a first predetermined temperature, creating a layer of ash over at least a portion of the hot gas path, and measuring an operating parameter associated with the combustor, wherein the operating parameter is reflective of at least one of an ash deposition rate or an accumulated ash buildup in the hot gas path. The method further includes comparing the operating parameter to a first predetermined limit and, when the operating parameter exceeds the first predetermined limit, permitting the combustor to operate at a second power level that produces a second temperature in the hot gas path that is greater than or equal to the first predetermined temperature.

Those of ordinary skill in the art will better appreciate the features and aspects of such embodiments, and others, upon review of the specification.

### BRIEF DESCRIPTION OF THE DRAWINGS

Embodiments of the present invention will now be described, by way of example only, with reference to the accompanying drawings in which:
Fig. 1 is a simplified diagram of an exemplary embodiment of the present invention incorporated into a gas turbine;
Fig. 2 is a graph of firing temperature over time according to one embodiment of the present invention; and
Fig. 3 is a enlarged view of an airfoil in the turbine shown in Fig. 1.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

Various embodiments of the present invention include a system and method for operating a combustor. In particular embodiments, a controls solution may operate the combustor at an initial firing temperature to produce a soft and water-soluble ash coating in or along a hot gas path. As used herein, the term "firing temperature" refers to the temperature of the combustion gases exiting the combustor. The controls solution may monitor one or more operating parameters reflective of a thickness of the soft and water-soluble ash coating, and when the operating parameter(s) indicates that a sufficient thickness has been achieved, the controls solution may allow the use of low-value fuels containing oil soluble vanadium and/or combustor operations at higher firing temperatures, either of which may produce a more dense and insoluble ash coating on top of the previously deposited water-soluble ash coating. The controls solution may continue to monitor the one or more operating parameters to determine appropriate intervals between cleaning procedures to reduce operational limitations and/or shutdowns of the combustor for these procedures while enhancing the overall efficiency of the combustor. Although exemplary embodiments of the present invention will be described generally in the context of a combustor incorporated into a gas turbine for purposes of illustration, one of ordinary skill in the art will readily appreciate that embodiments of the present invention may be applied to any combustor and are not limited to a gas turbine combustor unless specifically recited in the claims.

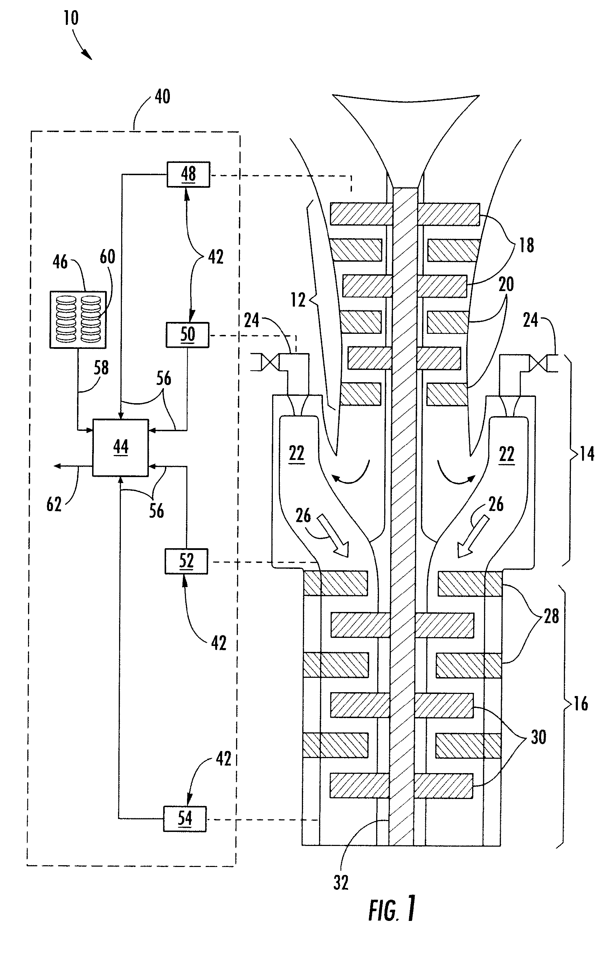

Fig. 1 provides a simplified diagram of an exemplary embodiment of the present invention incorporated, for example, into a gas turbine 10 used to produce electricity. As shown, the gas turbine 10 generally includes an axial compressor 12 at the front, one or more combustors 14 downstream from the compressor 12, and a turbine 16 downstream from the combustors 14. As used herein, the terms "upstream" and "downstream" refer to the relative location of components in a fluid pathway. For example, component A is upstream of component B if a fluid flows from component A to component B. Conversely, component B is downstream of component A if component B receives a fluid flow from component A.

Ambient air may be supplied to the compressor 12, and rotating blades 18 and stationary vanes 20 in the compressor 12 progressively impart kinetic energy to the working fluid (air) to produce a compressed working fluid at a highly energized state. The compressed working fluid exits the compressor 12 and flows into a combustion chamber 22 in each combustor 14. A fuel supply 24 in fluid communication with each combustor 14 supplies a fuel to each combustion chamber 22, and the compressed working fluid mixes with the fuel and ignites to generate combustion gases having a high temperature and pressure. The combustion gases flow along a hot gas path 26 through the turbine 16 where they expand to produce work. Specifically, the combustion gases may flow across alternating stages of stationary nozzles 28 and rotating buckets 30 in the hot gas path 26 to rotate a shaft 32 connected to a generator (not shown) to produce electricity.

As previously described, various fuels supplied to the combustors 14 may include contaminants and other impurities, such as oil soluble vanadium, which, when combusted, produces very corrosive byproducts having a low melting point. As a result, additives, such as calcium, iron, aluminum, and magnesium oxides or salts or nickel compounds, may be added to the fuel or injected into the combustors 14 to react with and/or stabilize the corrosive byproducts. Although effective at isolating the corrosive byproducts, the additives also produce substantial amounts of ash which precipitates along the hot gas path 26. For example, when added to a more pure, vanadium-free fuel, the additives tend to produce a soft, water-soluble ash across a broad range of firing temperatures. However, when added to a less pure, vanadium-containing fuel, especially in the presence of sulfur oxides, the additives tend to produce a soft, water-soluble ash at firing temperatures below approximately 2000°F and a higher density and insoluble ash at firing temperatures above approximately 2000°F.

The combustors 14 and/or associated components such as the compressor 12 and/or turbine 16 have various operating parameters that are indicative of or reflective of the ash deposition rate and/or the accumulated ash buildup in the hot gas path 26. For example, the concentration of vanadium in the fuel directly affects the rate at which the ash deposits and/or accumulates in the hot gas path 26, and the firing temperature of the combustors 14 may be used to characterize the ash formation as being primarily either magnesium sulfate or magnesium oxide. Therefore, the vanadium content of the fuel, the fuel flow rate, the operating time, and/or the firing temperature of the combustors 14 are examples of operating parameters associated with the combustors 14 that may indicate and/or reflect the type, rate, and/or accumulated ash buildup in the hot gas path 26. The ash deposition rate and/or the accumulated ash buildup in the hot gas path 26 progressively interferes with the aerodynamic and thermal properties of the surfaces along the hot gas path 26, which in turn directly affects the heat transfer characteristics and/or overall thermodynamic efficiency of the gas turbine 10, compressor 12, combustors 14, and/or turbine 16. As a result, various pressures, temperatures, power levels, and/or efficiency calculations associated with the gas turbine 10, compressor 12, combustors 14, and/or turbine 16 provide alternate or additional operating parameters that may indicate and/or reflect the ash deposition rate and/or the accumulated ash buildup in the hot gas path 26. For example, the accumulation of ash in the hot gas path 26 directly affects the pressure ratio of the compressor 12 and/or the overall efficiency of the gas turbine 10. As yet another example, the accumulation of ash in the hot gas path 26 generally causes a corresponding increase in the differential pressures and/or temperatures along the hot gas path 26. One of ordinary skill in the art can readily appreciate that the preceding examples are only a few of the operating parameters associated with the combustors 14 that are indicative or reflective of the ash deposition rate and/or the accumulated ash buildup in the hot gas path 26, and the various embodiments of the present invention are not limited to any particular operating parameter unless specifically recited in the claims.

As shown in Fig. 1, a system 40 for operating the combustor 14 may include one or more sensors 42, a controller 44, and an input device 46. Each sensor 42 measures one or more of the operating parameters associated with the combustors 14 that indicate or reflect at least one of the ash deposition rate or accumulated ash buildup in the hot gas path 26. The sensors 42 may comprise, for example, any combination of fuel sensors, pressure sensors, flow sensors, temperature sensors, and other sensors commonly associated with combustor and/or gas turbine operations. For example, as shown in Fig. 1, a first sensor 48 may measure the temperature or pressure of the compressor 12 inlet, a second sensor 50 may measure the fuel content or flow rate, a third sensor 52 may measure the firing temperature or pressure, and/or a fourth sensor 54 may measure the temperature or pressure of the turbine 16 exhaust. Each sensor 42 generates one or more signals 56 reflective of the operating parameter being monitored, which in turn indicates or reflects the ash deposition rate and/or the accumulated ash buildup in the hot gas path 26 and/or turbine 16.

The controller 44 is in communication with the one or more sensors 42 to receive the signals 56 reflective of the operating parameter. The technical effect of the controller 44 is to compare the signal(s) 56 reflective of the operating parameter to a predetermined limit and generate a control signal 62 for operating the combustor. As used herein, the controller 44 may comprise any combination of microprocessors, circuitry, or other programmed logic circuit and is not limited to any particular hardware architecture or configuration. Embodiments of the systems and methods set forth herein may be implemented by one or more general-purpose or customized controllers 44 adapted in any suitable manner to provide the desired functionality.

The controller 44 may be adapted to provide additional functionality, either complementary or unrelated to the present subject matter. For instance, one or more controllers 44 may be adapted to provide the described functionality by accessing software instructions rendered in a computer-readable form. When software is used, any suitable programming, scripting, or other type of language or combinations of languages may be used to implement the teachings contained herein. However, software need not be used exclusively, or at all. For example, as will be understood by those of ordinary skill in the art without required additional detailed discussion, some embodiments of the systems and methods set forth and disclosed herein may also be implemented by hard-wired logic or other circuitry, including, but not limited to application-specific circuits. Of course, various combinations of computer-executed software and hard-wired logic or other circuitry may be suitable, as well.

The input device 46 allows a user to communicate with the controller 44 and may include any structure for providing an interface between the user and the controller 44. For example, the input device 46 may comprise a keyboard, computer, terminal, tape drive, and/or any other device for receiving input from a user and generating an input signal 58 to the controller 44. In particular embodiments, the input device 46 may further include a database 60 of operating parameter information associated with comparable combustors and/or gas turbines. In this manner, the input device 46 may access the database 60 to manually or automatically establish one or more predetermined limits associated with a desired ash deposition rate and/or a desired accumulated ash buildup in the hot gas path 26. The one or more predetermined limits may be included in the input signal 58, and the controller 44 may compare the one or more signals 56 reflective of the operating parameter(s) to the input signal 58 to generate the control signal 62 for operating the combustor 14. The control signal 62 generated by the controller 44 may include, for example, maintenance scheduling information, permitted fuel purity, and/or permitted operating levels for the combustors 14 and/or gas turbine 10. For example, in particular embodiments, the control signal may include a signal that permits the combustor to operate at an increased temperature or power level, while in other particular embodiments, the control signal may include a signal that permits the combustor to operate using fuel containing vanadium.

In a particular embodiment of the present invention using magnesium as a vanadium inhibitor, for example, a first predetermined limit may reflect a desired deposition rate and/or desired accumulated buildup of water-soluble magnesium sulfate in the hot gas path 26. As the combustor 14 and/or gas turbine 10 initially operates, the control signal 62 generated by the controller 44 may include permitted operating levels for the combustor 14 and/or gas turbine 10 that limit the firing temperature of the combustors 14 to less than approximately 2000°F to promote the deposition and buildup of water-soluble magnesium sulfate in the hot gas path 26. When the signals 56 exceed the first predetermined limit, indicating a desired accumulation of water-soluble magnesium sulfate in the hot gas path 26, the control signal 62 generated by the controller 44 may permit the firing temperature of the combustors 14 to exceed approximately 2000°F, allowing the combustors 14 and thus the gas turbine 10 to operate at higher power levels and/or higher firing temperatures to increase the overall thermodynamic efficiency of the combustors 14 and/or gas turbine 10.

As the combustors 14 and/or gas turbine 10 operate at higher power levels and/or firing temperatures greater than approximately 2000°F, higher density and insoluble ash in the form of magnesium oxide deposits and builds up on top of the previously accumulated water-soluble magnesium sulfate. A second predetermined limit may reflect a desired deposition rate and/or desired accumulated buildup of insoluble magnesium oxide in the hot gas path 26. As the insoluble magnesium oxide ash builds up in the hot gas path 26, the signals 56 will eventually indicate that the second predetermined limit has been met or exceeded, and the control signal 62 generated by the controller 44 may again limit the firing temperature of the combustors 14 to less than approximately 2000°F to prevent the additional deposition and buildup of insoluble magnesium oxide ash in the hot gas path 26.

In another particular embodiment of the present invention, the combustor 14 may be first operated using a more pure, vanadium-free fuel, with one or more additives to supplement the production of the soft, water-soluble ash. As the combustor 14 and/or gas turbine 10 initially operates, the control signal 62 generated by the controller 44 may allow the combustor 14 to operate across a broad range of firing temperatures but may restrict or limit the fuel to vanadium-free fuel. The first predetermined limit may again reflect a desired deposition rate and/or desired accumulated buildup of water-soluble ash in the hot gas path 26. When the signals 56 exceed the first predetermined limit, indicating a desired accumulation of water-soluble ash in the hot gas path 26, the control signal 62 generated by the controller 44 may remove the fuel limitation, allowing the combustors 14 and thus the gas turbine 10 to operate at higher power levels and/or higher firing temperatures on the less expensive fuel.

As previously described, the control signal 62 may thus alternately limit or permit various power levels, firing temperatures, and/or fuel content. Alternately or in addition, the control signal 62 generated by the controller 44 may include maintenance scheduling information that allows an operator to schedule a cleaning procedure to remove the accumulated buildup of magnesium sulfate and/or magnesium oxide ash in the hot gas path 26. For example, the maintenance scheduling information included in the control signal 62 may allow an operator to schedule a dry cleaning procedure to coincide with an upcoming anticipated reduced operating power level and/or firing temperature of the combustor 14 and/or gas turbine 10, such as commonly occurs during nighttime operations. In other particular embodiments, the operator may use the maintenance scheduling information to cycle between "lower" and "higher" firing temperatures to enhance the effectiveness of the dry cleaning procedure. Alternately, the operator may schedule a washing procedure to coincide with an upcoming anticipated outage. The preferential accumulation of the water-soluble ash beneath the insoluble ash facilitates the removal of the insoluble ash during the washing procedure. Specifically, it is believed that the underlying water-soluble ash disrupts the crystal structure of any insoluble ash coating during cool down of the gas turbine 10, removing some of the insoluble ash coating and allowing the water to reach and dissolve the underlying water-soluble ash coating. During the subsequent start up and heat up of the gas turbine 10, the residual water vapor further disrupts and removes any insoluble ash coating remaining in the hot gas path 26.

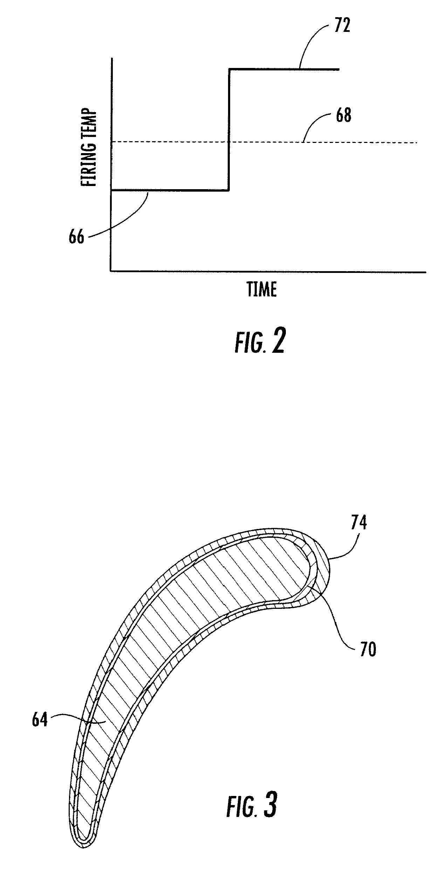

Figs. 2 and 3 illustrate the desired effects of operating the combustor 14 using the system 40 shown in Fig. 1. Specifically, Fig. 2 provides a graph of firing temperature versus time, and Fig. 3 provides an enlarged cross-section view of an airfoil 64, such as may be incorporated into the stationary nozzles 28 and/or rotating buckets 30 in the turbine 16 shown in Fig. 1. As shown in Fig. 2, the system 40 provides a method for operating the combustor 14 at a first power level that produces a first temperature 66 in the hot gas path 26 that is less than or equal to a first predetermined temperature 68. As previously described, the first predetermined temperature 68 may be selected to promote the deposition and buildup of water-soluble magnesium sulfate in the hot gas path 26. As a result, the system 40 creates a layer of water-soluble ash 70 over at least a portion of the hot gas path 26, as illustrated on the airfoil 64 shown in Fig. 3. The system 40 measures one or more operating parameters associated with the combustor 14 that are reflective of at least one of the ash deposition rate or the accumulated ash buildup in the hot gas path 26. The system 40 compares the signals 56 reflective of the operating parameters to the first predetermined limit, which as previously discussed may reflect a desired deposition rate and/or desired accumulated buildup of water-soluble ash in the hot gas path 26. When the signals 56 meet or exceed the first predetermined limit, the system 40 may operate the combustor at a second power level that produces a second temperature 72 in the hot gas path 26 that is greater than or equal to the first predetermined temperature 68. As a result, the system 40 creates a layer of insoluble ash 74 over at least a portion of the hot gas path 26, as again illustrated on the airfoil 56 shown in Fig. 3. As previously discussed, the system 40 may further compare the signals 56 reflective of the operating parameters to the second predetermined limit, which as previously discussed may reflect a desired deposition rate and/or desired accumulated buildup of insoluble ash in the hot gas path 26.

It is anticipated that the system 40 and methods described herein may provide several commercial advantages over existing technologies without requiring the design, purchase, or installation of any additional hardware. Specifically, the system 40 and methods described herein may allow the use of low value fuels containing oil soluble vanadium without unduly sacrificing efficiency, power output, and/or availability of the combustors 14 or gas turbine 10. The establishment of the soft, water-soluble ash layer allows higher firing temperatures while still allowing water washing procedures to effectively remove any insoluble ash buildup in the hot gas path 26. The increased firing temperatures in turn will increase the available power output and/or overall efficiency of the combustors 14 and/or gas turbine 10, resulting in substantial economic benefits.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Various aspects and embodiments of the present invention are defmed by the following numbered clauses:
1. A method for operating a combustor, comprising:
   a. operating the combustor using a vanadium-free fuel;
   b. creating a layer of ash over at least a portion of the hot gas path;
   c. measuring an operating parameter associated with the combustor, wherein the operating parameter is reflective of at least one of an ash deposition rate or an accumulated ash buildup in the hot gas path;
   d. comparing the operating parameter to a first predetermined limit; and
   e. when the operating parameter exceeds the first predetermined limit, permitting the combustor to operate using fuel containing vanadium.
2. The method as in clause 1, further comprising comparing the operating parameter to a second predetermined limit.
3. The method as in clause 1 or 2, wherein creating the layer of ash comprises creating a layer of soluble ash over at least a portion of the hot gas path.
4. The method as in any of clauses 1 to 3, wherein creating the layer of ash comprises creating a layer of insoluble ash over at least a portion of the hot gas path.
5. The method as in any of clauses 1 to 4, further comprising removing the layer of ash over at least a portion of the hot gas path.
6. The method as in any of clauses 1 to 5, further comprising generating a control signal containing at least one of maintenance scheduling information, permitted fuel content, or permitted operating levels for the combustor.

## Claims

1. A system (40) for operating a combustor (14), comprising:
a. a sensor (42) that measures an operating parameter associated with the combustor (14) and generates a signal (56) reflective of the operating parameter, wherein the operating parameter is reflective of at least one of an ash deposition rate or an accumulated ash buildup in a hot gas path (26);
b. a controller (44) in communication with said sensor (42) to receive said signal (56) reflective of the operating parameter, wherein said controller (44) compares said signal (56) reflective of the operating parameter to a predetermined limit (68) and generates a control signal (62) for operating the combustor (14); and
c. wherein said control signal (62) comprises at least one of a signal that permits the combustor (14) to operate at an increased temperature or a signal that permits the combustor (14) to operate using fuel containing vanadium.

2. The system (40) as in claim 1, wherein the operating parameter comprises at least one of a fuel content, a fuel flow rate, a temperature, a time, or an efficiency associated with the combustor (14).

3. The system (40) as in claim 1 or 2, wherein the operating parameter is reflective of at least one of a deposition rate, an accumulated buildup of a soluble ash in the hot gas path (26) or an accumulated buildup of an insoluble ash in the hot gas path (26).

4. The system (40) as in any of claims 1 to 3, wherein said control signal (62) includes at least one of maintenance scheduling information, permitted fuel content, or permitted operating levels associated with the combustor (14).

5. The system (40) as in any preceding claim, further comprising an input device (46) in communication with said controller (44), wherein said input device (46) generates an input signal (58) to said controller (44).

6. The system (40) as in claim 5, wherein said controller (44) adjusts said control signal (62) based on said input signal (58).

7. The system (40) as in claims 5 or 6, wherein said input device (46) comprises a database (60) of parameter information associated with comparable combustors (14).

8. The system of any preceding claims, further comprising:
a. a compressor (12);
b. a combustor (14) downstream from said compressor (12);
c. a fuel supply (24) in fluid communication with said combustor (14); and
d. a turbine downstream from said combustor (14).

9. A method for operating a combustor (14), comprising:
a. operating the combustor (14) at a first power level that produces a first temperature in a hot gas path (26) that is less than or equal to a first predetermined temperature (68);
b. creating a layer of ash (70, 74) over at least a portion of the hot gas path (26);
c. measuring an operating parameter associated with the combustor (14), wherein the operating parameter is reflective of at least one of an ash deposition rate or an accumulated ash buildup in the hot gas path (26);
d. comparing the operating parameter to a first predetermined limit; and
e. when the operating parameter exceeds the first predetermined limit, permitting the combustor (14) to operate at a second power level that produces a second temperature in the hot gas path (26) that is greater than or equal to the first predetermined temperature (68).

10. The method as in claim 9, further comprising comparing the operating parameter to a second predetermined limit.

11. The method as in claim 9 or 10, wherein creating the layer of ash (70, 74) comprises creating a layer of soluble ash (70), or a layer of insoluble ash (74), over at least a portion of the hot gas path (26).

12. The method as in any of claims 9 to 11, further comprising removing the layer of ash over (70, 74) at least a portion of the hot gas path (26).

13. The method as in any of claims 9 to 12, further comprising generating a control signal (62) containing at least one of maintenance scheduling information, permitted fuel content, or permitted operating levels for the combustor (14).
